# EUROPÄISCHE PATENTSCHRIFT

(11) **EP 2 234 174 B1**
(45) Veröffentlichungstag und Bekanntmachung des Hinweises auf die Patenterteilung: **10.10.2018**
(21) Anmeldenummer: 10002868.7
(22) Anmeldetag: 18.03.2010
(51) Int. Cl.: H02S 20/23, F24S 25/00

(54) **Dacheindeckungssystem für Solarmodule**
Roof covering system for solar modules
Système de recouvrement de toit pour modules solaires

(30) Priorität: 27.03.2009 DE 202009004150 U; 03.08.2009 EP 09009989
(43) Veröffentlichungstag der Anmeldung: 29.09.2010
(73) Patentinhaber: Beyersdorffer, Mathias, 29160 Crozon (FR)
(72) Erfinder: Beyersdorffer, Mathias, 29160 Crozon (FR)
(74) Vertreter: Heyerhoff Geiger & Partner Patentanwälte PartGmbB

(56) Entgegenhaltungen:
- EP-A1- 1 039 549
- WO-A1-2006/072230
- DE-U1-202007 003 060
- DE-U1-202007 008 659
- JP-A- 2004 084 369
- JP-A- 2006 144 267

## Beschreibung

Die Erfindung betrifft ein Dacheindeckungssystem zur Befestigung von auf einem Schrägdach geschuppt angeordneten und als Dacheindeckung dienenden Dachmodulen, mit den Dachmodulen, einer Anzahl von in Ablaufrichtung ausgerichteten Längsschienen und einer Klemmvorrichtung zur klemmenden Befestigung der Dachmodule auf den Längsschienen.

Photovoltaik-Dachmodule, im Folgenden vereinfacht PV-Module genannt, werden bei einer Indach-Konstruktion als Dach eindeckende Elemente verwendet, sodass sie Dachpfannen, Schindeln oder dergleichen ersetzen. Hierbei werden die empfindlichen und dünnen PV-Module jeweils gerahmt und die Rahmen werden in ein Trägersystem eingefasst, das die PV-Module auf einem Dach befestigt. Die PV-Module können hierbei geschuppt, also wie Dachziegel in Ablaufrichtung teilweise überlappend, angeordnet sein, sodass sie das Dach abdichtende Dachmodule bilden, an denen das Wasser wie bei Dachziegeln von oben nach unten in Ablaufrichtung ablaufen kann.

Aus der EP 1 039 549 A1 ist ein Dacheindeckungssystem zur überschuppenden Befestigung von Dachmodulen bekannt, bei dem die Dachmodule mithilfe von Klammern an Längsschienen befestigt sind.

Aus der JP 2004 84369 A ist ein Dacheindeckungssystem zur überschuppenden Befestigung von Dachmodulen bekannt, bei dem die Dachmodule von Schienen gehalten werden, in die die Dachmodule oben und unten eingesteckt sind.

Ebenfalls ein Schienensystem, jedoch nicht für überschuppend angeordnet Dachmodule ist in der DE 20 2007 008 659 U1 und der JP 2006 144267 A beschrieben.

Es ist eine Aufgabe der Erfindung, ein Dacheindeckungssystem anzugeben, mit dem Dachmodule einfach und sicher als eine Dacheindeckung montiert werden können.

Diese Aufgabe wird durch ein Dacheindeckungssystem der eingangs genannten Art gelöst, das erfindungsgemäß eine an einem der Dachmodule befestigte Modulverlängerung aufweist, mit dem das Dachmodul unter ein darüber liegendes Dachmodul nach oben verlängert ist, so dass ein Eindrücken von Regen zwischen den beiden Dachmodulen hindurch in das Schrägdach mithilfe der Modulverlängerung vermieden wird. Eine Rahmung der einzelnen Dachmodule kann entfallen und die Dachmodule können wie vom Hersteller geliefert direkt auf der Baustelle im Dach zusammengefügt und das Dach so gedeckt werden. Eine Montagevorbereitung in einem vorbereitenden Betrieb kann entfallen.

Ein Dachmodul kann ein PV-Modul oder ein thermisches Solarmodul zum Erwärmen von Flüssigkeit, ein Dachfenster oder ein beliebiges anderes das Dach eindeckendes Element sein. Die Ablaufrichtung verläuft zweckmäßigerweise von einem First zu einer Traufe, insbesondere senkrecht zu First und Traufe. Die Trägerschienen sind vorteilhafterweise Profilschienen, z.B. aus Metall, insbesondere aus Aluminium, wobei die Querschienen auch Latten sein können, beispielsweise aus Holz oder einem Kunststoff.

Die Klemmvorrichtung kann Teil einer Längsschiene oder separat ausgeführt sein oder separat sein und mit einer Längsschiene zur Erzeugung der Klemmung zusammenwirken. Die Klemmvorrichtung ist zweckmäßigerweise zur Erzeugung einer Klemmung ohne bewegliche Elemente ausgeführt. Vorteilhafterweise ist sie Bestandteil einer einstückigen Längsschiene.

Die klemmende Verbindung erfolgt zweckmäßigerweise an zwei gegenüberliegenden Längsseiten eines Dachmoduls, insbesondere von allen Dachmodulen, wobei die beiden Querseiten frei von der Klemmvorrichtung bleiben können, sodass sie dort nicht klemmend gehalten sind. Auch im betriebsbereit montierten Zustand sind die Dachmodule zweckmäßigerweise rahmenfrei und nur an zwei gegenüberliegenden Kantenseiten gehalten. Entlang der anderen Seiten können sie aufliegen oder anliegen. Zweckmäßigerweise sind die Dachmodule auch im montierten, insbesondere betriebsbereiten Zustand rahmenlos vom Dacheindeckungssystem gehalten.

Zweckmäßigerweise umfasst das Dacheindeckungssystem Querschienen, die senkrecht zu den Längsschienen ausgerichtet sind und mit diesen einen Kreuzschienenverbund bilden können.

In einer vorteilhaften Ausgestaltung der Erfindung ist jede der Längsschienen mit einer Klemmvorrichtung ausgerüstet, die einstückig an die Längsschiene angeformt ist. Es kann eine einfache, schnelle und präzise Montage der Dachmodule erfolgen, ohne dass bewegliche Teile zum Klemmen der Dachmodule eingesetzt werden müssen.

Eine effiziente und schnelle Klemmung der Dachmodule kann erreicht werden, wenn die Klemmvorrichtung zum Klemmen von zwei nebeneinander angeordneten Dachmodulen ausgeführt ist.

Eine einfache und effektive Abdichtung des Dachs kann erreicht werden, wenn die Klemmvorrichtung ein Dach über eine Längskante eines geklemmten Dachmoduls bildet, das entlang der Längskante verläuft. Hierbei verläuft das Dach zumindest im Wesentlichen über die gesamte Länge des Dachmoduls.

Ein Dachmodul wird zweckmäßigerweise in eine Klemmvorrichtung eingeschoben, sodass es in der Klemmvorrichtung klemmend gehalten wird. Um eine gute Abdichtung des Dachmoduls in der Klemmvorrichtung zu erreichen, ist es sinnvoll, wenn das Dachmodul schräg von oben in die Klemmvorrichtung eingeschoben wird und dann mit ihrer freien Längskante nach unten abgesenkt wird, bis das Dachmodul waagerecht - abgesehen von der Dachneigung - in der Klemmvorrichtung liegt. Dieses Einschieben kann vereinfacht werden, wenn die vordere eingeschobene Längskante des Dachmoduls tiefer geführt werden kann als eine Plattform der Längsschiene, auf der das Dachmodul im montierten Zustand ruht. Hierzu ist die Längsschiene zweckmäßigerweise so ausgeführt, dass eine in die Klemmvorrichtung eingeschobene Längskante des Dachmoduls im montierten Zustand nach innen über die Plattform hinausragt und frei hängt, ggf. innerhalb einer die Längskante des Dachmoduls umgreifenden Dichtung.

Zum Montieren eines Dachmoduls wird dieses zweckmäßigerweise seitlich, also z.B. senkrecht zur Längsrichtung, die parallel zur Ablaufrichtung sein kann, in die Klemmvorrichtung eingeschoben. Hierzu ist die Erfindung auf ein Verfahren zum Montieren eines Dachmoduls in eine Längsschiene eines Dacheindeckungssystems gerichtet, bei dem das Dachmodul erfindungsgemäß in eine Klemmvorrichtung der Längsschiene eingeschoben wird.

In einer weiteren vorteilhaften Ausgestaltung der Erfindung ist zwischen Dachmodul und Klemmvorrichtung eine Dichtung angeordnet, die in ihren Abmessungen so gefertigt ist, dass sie durch die Klemmvorrichtung von außen zusammengedrückt das Dachmodul klemmend hält. Die Dichtung umgreift vorteilhafterweise die obere und untere eingeschobene Längskante des Dachmoduls.

Eine besonders einfache Montage ist ermöglicht, wenn die rahmenlosen Dachmodule in Querrichtung beidseitig, also an beiden Längsseiten, von einer Dichtung eingefasst sind und die Dichtung unmittelbar zwischen Klemmleiste und Längsschiene eingeklemmt ist. Die Querrichtung kann parallel zu Querschienen verlaufen und kann die Richtung des Firsts sein. Die Dichtung verläuft zweckmäßigerweise in Ablaufrichtung und kann einteilig oder mehrteilig sein, sodass beispielsweise ein Dichtungselement zwischen Klemmleiste und Dachmodul und ein weiteres zwischen Dachmodul und Längsschiene eingeklemmt ist.

Um eine einfache Montage und eine gute Abdichtung des Dachs zu erreichen, ist es vorteilhaft, wenn die Dichtung an ihrem unteren Ende eine Verdickung in der Art aufweist, dass die Verdickung auf einer Plattform der Längsschiene zum Tragen eines Dachmoduls aufliegt, und die Dichtung sich in Richtung zur in die Klemmvorrichtung eingeschobenen Längskante des Dachmoduls verjüngt. Die Verjüngung kann so sein, dass die Dichtung an der eingeschobenen und beispielsweise frei hängenden Längskante unabhängig von einer Halte-Rillung der Dichtung dünner als an der Verdickung ausgeführt ist.

Außerdem wird vorgeschlagen, dass eine Längsschiene eine Plattform zum Tragen eines Dachmoduls aufweist, in die ein Kondensatablauf eingearbeitet ist. Der Kondensatablauf kann hierbei auch an die Plattform angrenzen. Das innen an einem Dachmodul gebildete Kondenswasser kann im Kondensatablauf abgeführt werden, ohne dass eine darunter liegende Dachschicht feucht wird. Der Kondensatablauf ist zweckmäßigerweise so gelegen, dass Wasser von der Endkante der Dichtung in den Kondensatablauf abgestreift wird.

In einer weiteren vorteilhaften Ausführungsform der Erfindung sind mehrere Längsschienen in Längsrichtung hintereinander geschuppt angeordnet, insbesondere entsprechend den Dachmodulen. Auf diese Weise kann eine Parallelität von geschuppten Dachmodulen und Längsschienen erreicht werden, was vorteilhaft für eine gute Abdichtung des Dachs und eine einfache Montage ist. Die Längsschienen können hierbei etwas länger als ein Dachmodul ausgeführt sein, um einen guten Zusammenhalt zu gewähren, sind jedoch zweckmäßigerweise kürzer als die Länge von zwei Dachmodulen.

Zweckmäßigerweise ist in Querrichtung zwischen zwei Dachmodulen jeweils eine Längsschiene angeordnet, die nur diese beiden Dachmodule trägt. Darüber und darunter liegende Dachmodule werden jeweils von anderen Längsschienen getragen. Durch einen Eingriff von zwei geschuppt zueinander angeordneten Längsschienen ineinander im Bereich ihrer Überlappung kann die Montage vereinfacht, die Verbindung von Längsschienen stabil und eine Maßgenauigkeit hoch gehalten werden.

Zur Befestigung von zwei insbesondere ineinander greifenden Längsschienen umfasst das Dacheindeckungssystem vorteilhafterweise eine Befestigungseinrichtung zum Befestigen von zwei zueinander parallelen Längsschienen aneinander. Die Befestigung kann besonders einfach durch ein Einstecken der beiden Längsschienen ineinander und/oder ein Einstecken der Befestigungseinrichtung oder eines Befestigungsmittels davon in eine oder beide Längsschienen erfolgen, wodurch die Befestigung erreicht wird. Zweckmäßigerweise ist das eingesteckte Befestigungseinrichtung oder ein Befestigungsmittel davon ein Bolzen.

Um eine einfache Montage sowohl von dickeren als auch dünneren Dachmodulen einfach zu halten, ist es vorteilhaft, wenn die Befestigungseinrichtung eine Befestigung der beiden Längsschienen aneinander in zumindest zwei zueinander in der Höhe versetzten Positionen erlaubt. Die beiden Höhen sind zweckmäßigerweise vorgegeben, sodass eine Befestigung nur in der einen oder anderen Höhe - oder weiteren diskret vorgegebenen Höhen - erfolgen kann.

Eine variable Befestigung kann auf einfache Weise erreicht werden, wenn die Befestigungseinrichtung zwei übereinander liegende Öffnungen in einer der Längsschienen aufweist, in die jeweils ein Befestigungsmittel einführbar ist, das in eine Öffnung der anderen Längsschiene eingreift. Weist die Befestigungseinrichtung ein in beide Längsschienen eingreifendes Befestigungsmittel auf, das mittels einer in eine der Längsschienen eingreifende Verdickung, z.B. einer Mutter, in dieser Längsschiene radial zentriert ist, kann das Befestigungsmittel einfach und kostengünstig gehalten werden.

In einer weiteren Ausführungsform der Erfindung wird vorgeschlagen, dass die Längsschienen jeweils auf zumindest einer Querschiene befestigt sind, die eine Befestigung der Längsschienen auf einem Dach herstellt. Hierzu können die Längsschienen formschlüssig in die Querschienen eingehängt sein. Der Formschluss wird zweckmäßigerweise durch ein Eingreifen eines Schienenbereichs der Längs- oder Querschiene in eine Ausnehmung der Quer- bzw. Längsschiene realisiert. Die Ausformung kann also in der Querschiene oder in der Längsschiene eingebracht sein.

Vorteilhafterweise sind Längsschienen in Querrichtung verschiebbar in Querschienen eingehängt. Ein Querabstand zwischen den Längsschienen ist auf diese Weise einfach und im Wesentlichen beliebig einstellbar, sodass das Dacheindeckungssystem für unterschiedlich breite Dachmodule verwendbar ist. Zum Erreichen dieser Verschiebbarkeit liegt zwischen einer Längsschiene und einer Querschiene zweckmäßigerweise ein Gleitlager, mittels dessen die Längsschiene im befestigten Zustand auf der Querschiene gleitet.

Hintergreifen die Längsschienen die Querschienen formschlüssig, so wird nicht nur die Montage erleichtert, sondern die auf den Längsschienen befestigten Dachmodule können auch gegen ein ungewolltes Abheben bei einem starken Wind gesichert werden. Der Hintergriff ist zweckmäßigerweise so ausgeführt, dass die Schwerkraft der Dachmodule einem Lösen des Hintergriffs entgegenwirken.

Um ein Eindrücken von Regen in das Dach zu vermeiden, kann zwischen zwei geschuppt zueinander angeordneten Dachmodulen eine quer verlaufende Dichtung im Bereich ihrer Überlappung angeordnet sein.

Besonders vorteilhaft ist eine gute Hinterlüftung des Dachs, um beispielsweise ein Kühlung von PV-Modulen zu verbessern. Eine gute Hinterlüftung kann erreicht werden, wenn im montierten Zustand zwischen zwei geschuppt übereinander angeordneten Dachmodulen ein Luftspalt verbleibt, in den Luft in das Dach einblasen werden kann. Um auf bei einem solchen offenen Dach ein Eindrücken von Regen in das Dach zu vermeiden, ist eine weit reichende Überlappung zwischen zwei sich überlappenden Modulen vorteilhaft. Um keine oder nur wenig aktive Fläche zu vermeiden, umfasst das Dacheindeckungssystem eine Modulverlängerung, mit dem das Dachmodul unter ein darüber liegendes Dachmodul verlängert ist. Die Verlängerung erfolgt in Richtung der Dachschräge nach oben.

Die Modulverlängerung kann einstückig oder mehrstückig zum Verlängern einer Überlappung zwischen zwei geschuppt zueinander angeordneten Dachmodulen sein. Die Modulverlängerung kann beispielsweise auf ein Dachmodul aufgesteckt oder anders befestigt werden, sodass es ein Stück weit unter das darüber liegende Dachmodul reicht. Das untere Dachmodul kann auf diese Weise nach oben hin verlängert werden.

Mit der Modulverlängerung können drei wesentliche Vorteile erzielt werden. Zunächst kann das Eindrücken von Regen unter die Dachmodule verhindert werden. Hierdurch kann zweitens auf die Dachmodule verhindert werden. Hierdurch kann zweitens auf eine Abdichtung zwischen den Dachmodulen verzichtet werden, sodass eine gute Hinterlüftung der Dachmodule gewährleistet ist. Dies wirkt einer zu starken Aufheizung von Solarmodulen entgegen. Und drittens kann ein guter Kondensatablauf erreicht werden. Im Unterdachbereich entsteht je nach Witterung Kondensat, besonders am kalten Glas und Blech. Das Kondensat läuft auf der Modulunterseite entlang und tropft an der Modulunterkante ab, z.B. auf die Außenseite eines darunter liegenden Dachmoduls.

An der Modulverlängerung wird ebenfalls etwas Kondensat entstehen. Dieses Wasser kann in einer kleinen Rinne der Modulverlängerung aufgefangen werden. Die Rinne kann das Wasser seitlich zur Längsschiene führen, sodass es über die Längsschiene ablaufen oder einfach wieder abtrocknen kann.

Die Verlängerungseinrichtung kann ein Klemmelement, z.B. ein Klemmprofil, zum Aufklemmen, insbesondere zum kraftschlüssigen Aufstecken, auf ein Dachmodul umfassen. Die fertige Befestigung erfolgt hierbei bereits durch das Aufstecken. Weiter ist es vorteilhaft, wenn ein oder mehrere weitere Elemente, z.B. eine Dichtung zum Abdichten am darüber liegenden Dachmodul und/oder ein flächiges Verlängerungselement, wie ein Blech oder eine Kunststoffplatte, in das Klemmelement eingesteckt sind. Auf diese Weise kann ein kostengünstiger modularer Aufbau der Modulverlängerung erreicht werden.

Das Klemmelement ist vorteilhafterweise mit einem Element versehen, durch das das Klemmelement an unterschiedlich dicke Dachmodule aufgeklemmt werden kann. Das Element kann in eine Ausnehmung des Klemmelements eingefügt sein. Auch ein Verlängerungselement ist zweckmäßigerweise in eine Ausnehmung des Klemmprofils eingefügt.

Die Erfindung wird anhand von Ausführungsbeispielen näher erläutert, die in den Zeichnungen dargestellt sind.

Es zeigen:
- FIG 1: einen Ausschnitt aus einem eingedeckten Dach mit sechs Dachmodulen und einen acht Längsschienen zeigenden Ausschnitt eines Dacheindeckungssystems,
- FIG 2: eine Draufsicht in Längsrichtung auf eine der Längsschienen,
- FIG 3: einen Schnitt durch das Schrägdach entlang der Linie III-III,
- FIG 4: einen Querschnitt durch eine Längsschiene aus FIG 3 entlang der Schnittlinie IV-IV,
- FIG 5: einen Querschnitt durch eine Längsschiene, die in einem größeren senkrechten Abstand zueinander aneinander befestigt sind,
- FIG 6: eine Seitenansicht auf eine Längsschiene mit einer Ausnehmung zum Einhängen in eine Querschiene und Ausnehmungen zum Auflegen einer weiteren Längsschiene,
- FIG 7: eine Seitenansicht auf eine anderen Längsschiene mit einer flacheren Ausnehmung zum Auflegen einer weiteren Längsschiene,
- FIG 8: eine schematische Darstellung eines Dachmoduls mit einer aufgesteckten Modulverlängerung und
- FIG 9: einr Modulverlängerung mit einem Klemmelement zum Aufstecken auf ein Dachmodul.

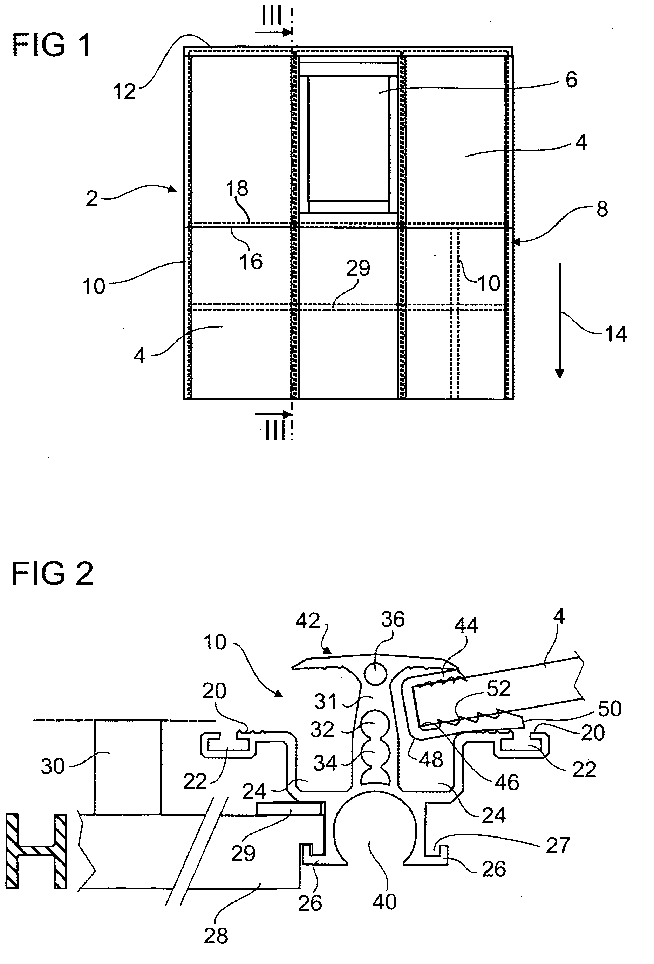

FIG 1 zeigt einen Ausschnitt aus einem Schrägdach 2 mit einer Dachneigung von beispielsweise 30° in einer Draufsicht senkrecht auf das Schrägdach 2. Das Schrägdach ist mit einer Vielzahl von Dachmodulen 4, 6 abdichtend eingedeckt, von denen der Übersichtlichkeit halber nur vier Dachmodule 4, 6 dargestellt sind. Die Abdichtung ist nicht winddicht, um eine Hinterlüftung der Dachmodule zuzulassen, sondern in der Art von überschuppenden Dachziegeln. Das Dachmodul 6 ist ein Dachflächenfenster, das in FIG 1 von fünf Dachmodulen 4 umgeben ist, die als Photovoltaik-Modul (PV-Modul) ausgeführt sind. Die PV-Module 4 sind Glasmodule zur photovoltaischen Erzeugung von Strom. Um die Dachmodule 4, 6 sind weitere Dachmodule 4, 6 angeordnet, die der Übersichtlichkeit halber nicht dargestellt sind.

Die Dachmodule 4, 6 sind getragen von einem Dacheindeckungssystem 8 mit einer Anzahl von Trägerschienen, von denen die Trägerschienen in Ablaufrichtung 14 Längsschienen 10 sind und die Trägerschienen senkrecht dazu Querschienen 12, die parallel zu einem nicht dargestellten Dachfirst verlaufen. Die Längsschienen 10 und Querschienen 12 bilden einen Kreuzschienenverbund, der parallel zum Dachfirst ausgerichtet ist, sodass mehrere Reihen von Dachmodulen 4, 6, von denen in FIG 1 nur zwei Reihen ä drei Dachmodule 4, 6 gezeigt sind, parallel zum Dachfirst des Schrägdachs 2 angeordnet sind. Parallel zur Ablaufrichtung 14, die senkrecht zum Dachfirst und vom Dachfirst in Richtung einer Traufe, die nicht dargestellt ist, gerichtet ist, sind die Längsschienen 10 angeordnet.

Die Dachmodule 4, 6 sind geschuppt angeordnet, sodass eine Unterkante 16 eines oberen Dachmoduls 4, 6 ein Stück weit einen oberen Bereich eines darunter liegenden Dachmoduls 6 überdeckt, sodass dessen Oberkante 18 unter dem jeweils darüber angeordneten Dachmodul 4, 6 zu liegen kommt. Auf diese Weise sind die Dachmodule 4, 6 als das Schrägdach 2 abdichtende Elemente einer Dacheindeckung ausgeführt, analog wie Dachziegel oder Dachschindeln.

FIG 2 zeigt eine Draufsicht in Längsrichtung, also in Ablaufrichtung 14, auf eine der Längsschienen 10. Die Längsschiene 10 ist eine stranggepreßte bzw. stranggezogene einstückige Schiene aus Kunststoff oder Metall, insbesondere Aluminium.

Sie ist beidseitig mit in Längsrichtung ausgerichteten Plattformen 20 versehen, auf denen Dachmodule 4, 6 in montiertem Zustand ruhen. In die Plattformen 20 ist jeweils eine Ablaufrinne 22 zum Abführen von Kondenswasser eingearbeitet. Weiter umfasst die Längsschiene 10 beidseitig Ausnehmungen 24 zur Aufnahme von Füßen 26 einer über der Längsschiene 10 montierten weiteren Längsschiene 10.

In die Füße 26 ist jeweils eine Ausnehmung 27 eingearbeitet, in die eine Stützschiene 28 eingelegt ist, sodass sie formschlüssig in der Ausnehmung 27 gehalten ist. Die Stützschiene 28 verläuft parallel zu den Querschienen 12 aber mittig im Bereich eines Dachmoduls 4. Die Stützschiene 28 hat die Form eines Doppel-T-Trägers, dessen Querschnittsprofil auf der linken Seite von FIG 2 zur Information wiedergegeben ist. Zur unbeweglichen Befestigung der Stützschiene 28 in der Ausnehmung 27 ist sie mit einem Klemmelement 30 in der Ausnehmung 27 verkeilt.

Auf der Stützschiene 28 ist eine Auflage 30 aus Gummi, Hartgummi oder Kunststoff angeordnet, z.B. aufgeklebt oder aufgesteckt, die in ihrer Höhe so bemessen ist, dass sie von unten an die gestrichelt angedeutete Unterfläche des Dachmoduls 4 reicht. Auf diese Weise wird das Dachmodul 4 von unten gestützt und kann somit eine hohe Schneelast tragen, ohne eine Beschädigung zu erfahren.

In FIG 1 sind außerdem weitere Längsschienen 10 unter den Dachmodulen 4 angeordnet, von denen eine gestrichelt mittig unter einem Dachmodul 4 angedeutet ist. Die Längsschine 10 kann identisch zu den zwischen den Dachmodulen 4, 6 angeordneten Längsschienen 10 oder anders ausgeführt sein. Zweckmäßigerweise ist sie ebenfalls in eine Querschiene 12 eingehängt.

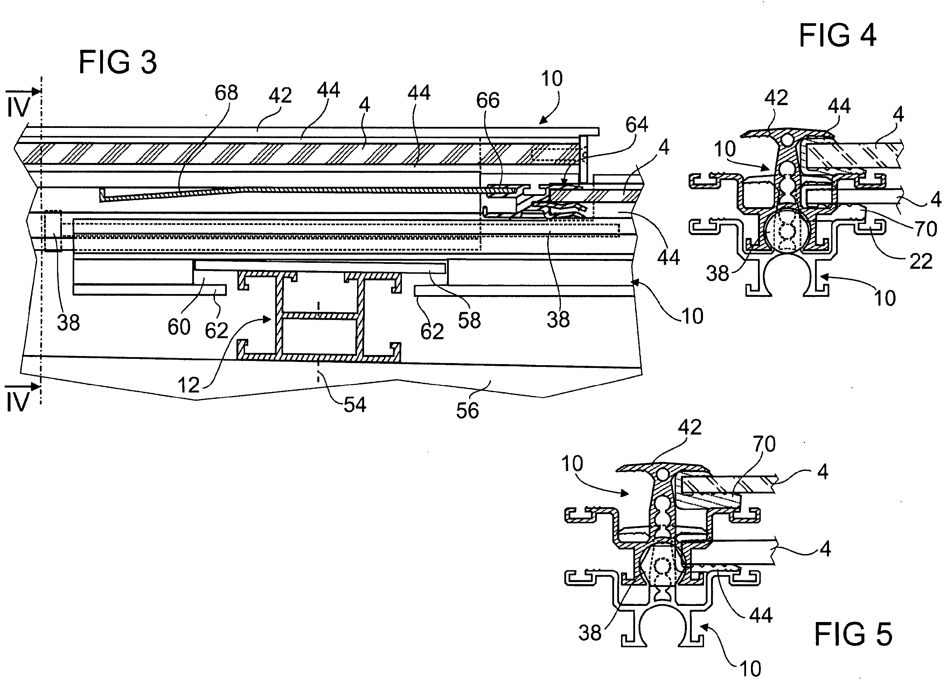

In einem zentralen Bereich ist die Längsschiene 10 mit einem Hals 31 versehen, in den Längsöffnungen 32, 34, 36 eingebracht sind. Die Längsöffnungen 32, 34 dienen zur Aufnahme eines Befestigungsmittels 38 (siehe FIG 3) zur Befestigung der Längsschiene 10 an einer weiteren, oben in die Längsschiene 10 eingehängten Längsschiene 10. Die Längsöffnung 36 dient der Gewichts- und Materialersparnis. Zwischen den Füßen 26 ist eine weitere Längsöffnung 40 angeordnet, die zur Aufnahme einer Verdickung eines baugleichen Befestigungsmittels 38 dient, das zur Befestigung der Längsschiene 10 an einer weiteren, unten in die Längsschiene 10 eingehängten Längsschiene 10 vorgesehen ist.

An ihrem höchsten Punkt trägt die Längsschiene 10 eine Klemmvorrichtung 42 in Form eines beidseitigen Längsdachs in Verbindung mit den Plattformen 20. Die Klemmvorrichtung 42 ist Teil des Profils, das die Längsschiene 10 bildet. Sie dient zum klemmenden Halten eines Dachmoduls 4, 6 auf der Längsschiene 10. Hierzu wird beispielsweise das Dachmodul 4, das mit einer Dichtung 44 versehen sein kann, schräg von oben unter die Klemmvorrichtung 42 geschoben, wie in FIG 2 dargestellt ist. Eine untere Längskante 46 der Längsschiene 10 oder eine untere Längskante 48 der Dichtung 44 wird hierbei in die Ausnehmung 24 eingeführt und somit in eine tiefere Stellung gebracht, als die Ebene, die durch die Plattform 20 gebildet ist. Anschließend wird das Dachmodul 4 in die waagerechte Position gebracht - abgesehen von der Dachneigung. Hierdurch wird das der Längsschiene 10 zugewandte Ende des Dachmoduls 4 zwischen die Klemmvorrichtung 42 und die Plattform 20 geklemmt und dort gehalten.

Die Dichtung 44 ist mit einer zum Dachmodul 4 gerichteten Verzahnung 52 zum Halten des Dachmoduls 4 ausgeführt. Diese Verzahnung 52 ist des einfacheren Verständnisses halber so dargestellt, als wäre kein Dachmodul 4 vorhanden. Bei eingeschobenem Dachmodul 4 ist die Verzahnung 52 selbstverständlich zusammengedrückt, z.B. so, wie in FIG 4 dargestellt ist.

Zum Herstellen einer vorteilhaften Klemmkraft und zur Erleichterung der Montage ist die Dichtung 44 unter dem Dachmodul 4 von ihrem Ende 50 zur Längskante 48 hin verjüngend ausgeführt. Diese Verjüngung ist unabhängig von der Verzahnung 52 der Dichtung 44. Hierdurch liegt der dickere Teil der Dichtung 44 auf der Plattform 20 auf und drückt das Dachmodul 4 nach oben gegen die Klemmvorrichtung 42. Der dünnere Teil der Dichtung 44 erlaubt eine leichtere Einführung des Dachmoduls 4 mitsamt Dichtung 44 unter die Klemmvorrichtung 42, sodass eine einfache Montage erreicht wird.

FIG 3 zeigt einen Ausschnitt aus einem Schnitt durch das Schrägdach 2 entlang der Richtung III-III aus FIG 1. Auf die Darstellung der Dachschräge wurde verzichtet. Zu sehen sind zwei Längsschienen 10 in einer Seitenansicht und eine Querschiene 12 in einer geschnittenen Ansicht. Über die untere Längsschiene 10 überlappend angeordnet ist die obere Längsschiene 10, die parallel zur unteren Längsschiene 10 ausgerichtet ist und diese entgegen der Ablaufrichtung fortsetzt. Die Querschiene 12 ist mit Hilfe einer Schraube 54 direkt mit einem Dachsparren 56 verschraubt. Die Querschienen 12 erstrecken sich entlang einer Mehrzahl von Dachmodulen 4, 6 bzw. - je nach Länge der Profile der Querschienen 12 - über die gesamte Breite des Schrägdachs 2. Auf die Querschiene 12 aufgeschraubt ist ein Gleitlager 58 aus Metall oder Kunststoff, auf dem die untere Längsschiene 10 seitlich, also in Querrichtung verrutschbar montiert ist.

Formschlüssig mit der Querschiene 12 und dem Gleitlager 58 verbunden ist die untere Längsschiene 10, die hierfür ein kleines Stück weit von ihrem oberen Ende beabstandet eine ausgefräste Ausnehmung 60 aufweist. Die untere Längsschiene 10 und die Querschiene 12 sind so ineinander eingehängt, dass ein Abrutschen der Längsschiene 10 in Ablaufrichtung 14 unterbunden wird. Durch Ausformungen 62 um die Ausnehmung 60, die das Gleitlager 58 beidseitig umgreifen, ist außerdem ein Abheben der unteren Längsschiene 10 nach oben weg, also in diesem Fall senkrecht zur Dachrichtung, beispielsweise durch Wind, unmöglich, wodurch eine Stabilität des Dacheindeckungssystems 8 erreicht wird. Dieser Schutz gegen Abheben wird dadurch verstärkt, dass die Längsschiene 10, der Schwerkraft folgend, nach unten gezogen wird, in FIG 3 nach rechts. Hierdurch wird die Ausformung 62 unter das Gleitlager 58 hineingezogen.

Um eine Montage und ggf. Demontage zu erleichtern, ist das Gleitlager 58 in Querrichtung nicht durchgehend sondern nur etwa doppelt so lang, wie die Querschiene 12 breit ist. Somit kann die Längsschiene 10 zur Montage mit ihrer Ausnehmung 60 über die Querschiene 12 gehängt und seitlich auf das Gleitlager 58 aufgeschoben werden.

Alternativ zur dargestellten Querschiene 12 ist es möglich, andere und insbesondere einfachere Profile zu verwenden, beispielsweise Dachlatten mit einem rechteckigen Querschnittsprofil oder andere stranggepreßte bzw. stranggezogene Schienen aus Kunststoff oder Metall, insbesondere Aluminium.

FIG 4 zeigt die beiden Längsschienen 10 in einer Draufsicht (untere Längsschiene 10) bzw. in einem Querschnitt (obere Längsschiene 10) entsprechend der Linie IV - IV aus FIG 3. Die Querschiene 12 und das Gleitlager 58 wurden der Übersichtlichkeit halber nicht dargestellt. Zu sehen sind die beiden in den Klemmvorrichtungen 42 und Dichtungen 44 fest montierten Dachmodule 4. Ebenfalls gut zu erkennen ist, dass Kondenswasser, das unten an einem Dachmodul 4 entlang läuft, vom unteren Ende 50 der Dichtung 44 in die Ablaufrinne 22 hinein abgestreift und dort gesammelt wird bzw. abfließen kann.

In den FIGs 3 und 4 ist außerdem das Befestigungsmittel 38 in der Seitendarstellung und in einer Draufsicht in Längsrichtung gezeigt. Das Befestigungsmittel 38 ist ein Bolzen mit einem Durchmesser von 6 mm mit einer Verdickung am oberen Ende mit einem Durchmesser von 15 mm. Alternativ ist eine lange Schraube mit einem Schraubenkopf möglich, wie in FIG 5 angedeutet ist. Das Befestigungsmittel 38 greift mit seinem unteren Ende in die Längsöffnung 34 der unteren Längsschiene 10 ein und wird dort radial zentriert gehalten. Die Verdickung ist in der Längsöffnung 40 der Längsschiene 10 radial zentriert gehalten. Durch diese beiden Halterungen sind die beiden Längsschienen 10 zweidimensional im Wesentlichen unbeweglich aneinander befestigt. Lediglich in Längsrichtung sind die Längsschienen 10 zueinander beweglich, sodass die obere Längsschiene 10 in Ablaufrichtung 14 nach oben von der unteren Längsschiene 10 abgezogen werden kann.

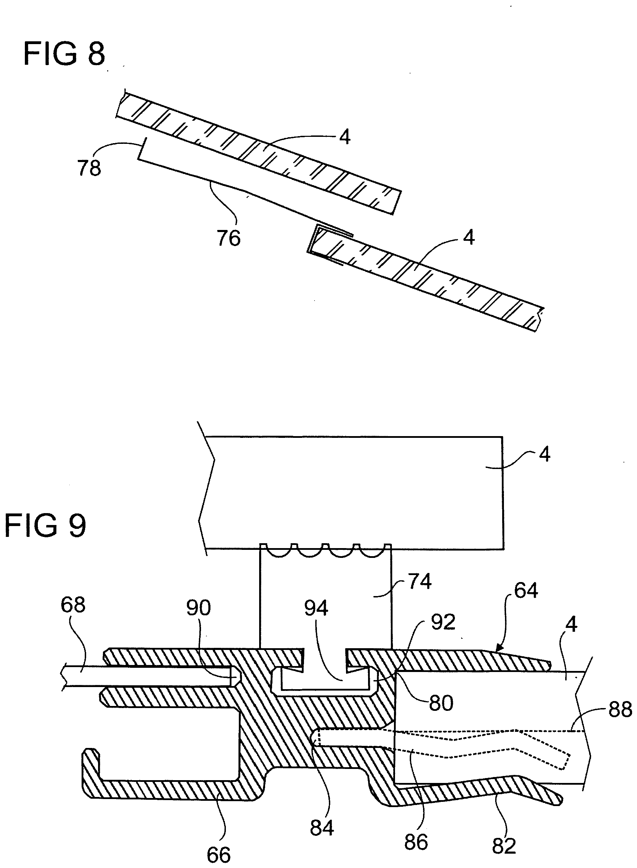

Ebenfalls in FIG 3 dargestellt ist eine Modulverlängerung 64 zur Verlängerung des Dachmoduls 4 nach oben. Die Modulverlängerung 64 ist in FIG 9 detaillierter dargestellt. Es umfasst ein Klemmelement 66 zum Aufstecken auf die Oberkante eines Dachmoduls 4. In das Klemmelement 66 eingesteckt ist ein Verlängerungselement 68 in Form eines Blechs oder einer Platte, das das untere Dachmodul 4 nach oben unter das obere Dachmodul 4 fortsetzt.

Aus FIG 4 ist außerdem zu sehen, dass die beiden Füße 26 der oberen Längsschiene 10 in die Ausnehmungen 24 der unteren Längsschiene 10 eingreifen, sodass in Querrichtung, also parallel zur Querschiene 12, ebenfalls ein Formschluss erreicht wird, der ein Verschieben der oberen Längsschiene 10 quer zur unteren Längsschiene 10 verhindert. Auf diese Weise ist die obere Längsschiene 10 zusätzlich eindimensional mit der unteren Längsschiene 10 befestigt.

In die Längsschienen 10 sind die Dachmodule 4, 6 jeweils eingefügt, wie aus den Schnitten aus FIG 4 und FIG 5 zu sehen ist. Die dargestellten Dachmodule 4 sind PV-Module, die eine Glasscheibe und eine rückseitige und beispielsweise in Harz vergossene PV-Schicht aufweisen. Je nach Ausführung können die Dachmodule 4, 6 unterschiedlich dick sein. Zur Verdeutlichung sind jeweils zwei unterschiedlich dicke Dachmodule in FIG 3, FIG 4 und FIG 5 dargestellt. Das Dacheindeckungssystem 8 ist flexibel hinsichtlich unterschiedlicher Dachmodule 4, 6 und auch hinsichtlich unterschiedlicher senkrechter Abstände zwischen einander überlappender Dachmodule 4, 6 zur Hinterlüftung.

In FIG 5 ist diese Flexibilität dargestellt. Die beiden Längsschienen 10 sind mit einem größeren Abstand zueinander senkrecht zur Dachfläche montiert. Hierzu wird das Befestigungsmittel 38 anstelle in die Längsöffnung 34 in die Längsöffnung 32 eingesteckt, sodass die obere Längsschiene 10 weiter oberhalb - senkrecht zur Dachfläche - zur unteren Längsschiene 10 angeordnet ist als im Beispiel aus FIG 4. Durch diese Maßnahme kann ein Abstand zwischen den Dachmodulen 4, 6 eingestellt werden.

Wie in den FIGs 3 - 5 dargestellt, sind zwei unterschiedlich dicke Dachmodule 4 in jeweils die entsprechende Klemmvorrichtung 42 eingesteckt. Ein Dickenausgleich findet über unterschiedliche Dichtungen 44, 70 statt, bei denen die Dicke des zwischen Dachmodul 4 und Plattform 20 oder Dachmodul 4 und Klemmvorrichtung 42 angeordneten Dichtungssegments unterschiedlich ist. In beiden Fällen bleibt die zu FIG 2 beschriebene Verjüngung erhalten.

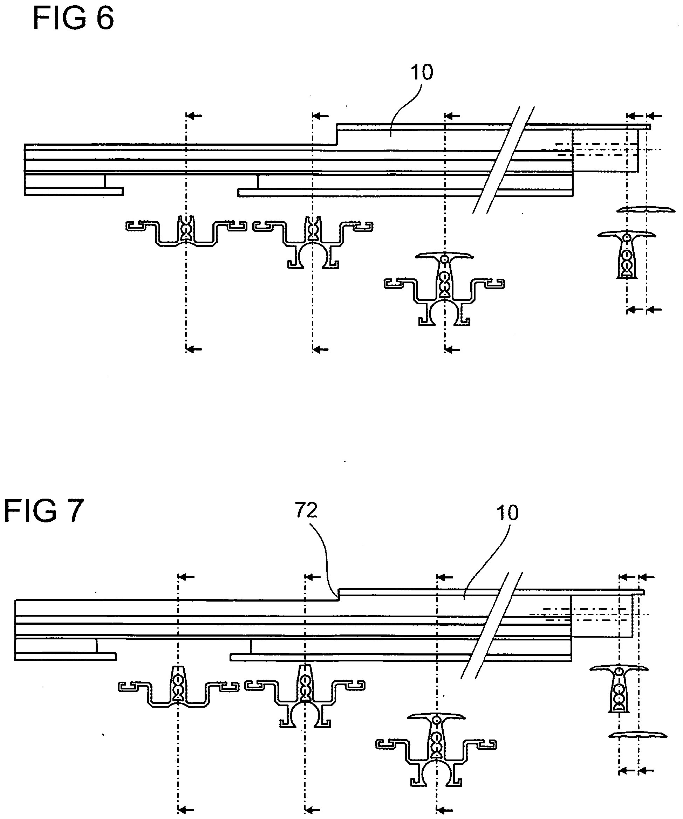

In FIG 6 und FIG 7 sind zwei Längsschienen 10 so dargestellt, dass ihre Ausfräsungen leicht zu erkennen sind. Zur weiteren Verdeutlichung sind an jeweils vier Schnitten die Profilquerschnitte dargestellt. FIG 6 zeigt die Längsschiene 10 zu der in FIG 4 gezeigten Überlappung zweier identischer Längsschienen 10. Die Längsschiene 10 aus FIG 7 ist mit einer flacheren oberen Ausnehmung 72 versehen, die dem Umstand gerecht wird, dass die wiederum identischen Längsschienen 10 weiter beabstandet überschuppend zueinander angeordnet sind, so wie in FIG 5 dargestellt ist. So kann auch bei dem weiteren Abstand die obere Längsschiene 10 auf der unteren Längsschiene 10 aufliegen.

Um eine gute Hinterlüftung der Dachmodule 4, 6 zu erreichen und dennoch zu verhindern, dass Regen von unten zwischen die überlappenden Dachmodule 4, 6 einbläst, stehen mehrere Möglichkeiten zur Verfügung. Eine Möglichkeit ist, eine in FIG 9 gezeigte Dichtung 74 zwischen die beiden überschuppenden Dachmodule 4, 6 im Überlappungsbereich anzubringen. Diese Dichtung 74 kann Teil der Modulverlängerung 64 sein, das in FIG 9 dargestellt ist. Die Dichtung 74 liegt von unten am oberen Dachmodul 4 an und dichtet so das obere gegen das untere Dachmodul 4 ab. Auch hier ist eine Verzahnung der Dichtung des besseren Verständnisses halber so gezeichnet, als ob die Dichtung nicht am Dachmodul 4 anliegen würde.

Eine weitere Möglichkeit der Abdichtung ist in FIG 8 dargestellt. FIG 8 zeigt nur die zwei Dachmodule 4 im Bereich ihrer Überlappung. Auf das untere Dachmodul 4 ist ein Modulverlängerung 76, beispielsweise als ein gekantetes Blech aufgesteckt, sodass das untere Dachmodul um beispielsweise 20 cm nach oben verlängert wird und hierdurch auch die Überlappung zwischen den Dachmodulen 4. Durch die verlängerte Überlappung wird einem Einblasen von Regen in das gedeckte Schrägdach 2 entgegengewirkt. Durch eine nach oben gerichtete Abwinkelung 78 wird zusätzliche Sicherheit erreicht, wobei zwischen der Abwinkelung 78 und dem Dachmodul 4 ein Luftspalt von 2 cm bis 5 cm verbleibt zur guten Hinterlüftung der Dachmodule 4, 6.

Eine alternative Möglichkeit einer Modulverlängerung bildet die Modulverlängerung 64, die in FIG 9 dargestellt ist. Zur besseren Sichtbarmachung ist das Klemmelement 66 schraffiert dargestellt, wohingegen die übrigen Elemente, wie Dachmodule 4, Dichtung 74 und Verlängerungselement 68 unschraffiert dargestellt sind, ohne damit eine besondere Ansicht darzustellen.

Das Klemmelement 66 ist in Form einer Profilschiene hergestellt, die sich parallel zu der Oberkante 80 des Dachmoduls 4 erstreckt, auf die es aufgesteckt ist. Die Profilschiene kann durch Strangpressen aus Metall, vorzugsweise Aluminium, oder aus Kunststoff hergestellt sein. Durch eine flexible Lippe 82, die in FIG 9 in ihrer entspannten Position und somit so dargestellt ist, als wäre das Klemmelement 66 nicht auf das Dachmodul 4 aufgesteckt, wird das Klemmelement 66 klemmend auf dem Dachmodul 4 gehalten.

In eine Ausnehmung 84 ist ein Adapterelement 86 eingesteckt, das die Funktion der flexiblen Lippe 82 übernimmt, wenn das Klemmelement 66 auf ein dünneres Dachmodul 4 aufgesteckt werden soll, wie durch die gestrichelte Linie 88 angedeutet ist. Soll das Klemmelement 66 auf ein dickeres Dachmodul 4 aufgesteckt werden, so wird das Adapterelement 86 weggelassen. Auch das Verlängerungselement 68 ist in eine Ausnehmung 90 des Klemmelements 66 eingesteckt, sodass es leicht austauschbar und somit an unterschiedliche Abstände zwischen den Dachmodulen 4 anpassbar ist. Je nach Dachneigung verlängert die Modulverlängerung 64 das untere Dachmodul 4 um 10 cm bis 15 cm unter das obere Dachmodul 4. Eine weitere Ausnehmung 92 dient zur Aufnahme einer Ausformung 94 der Dichtung 74, um diese in der Weise klemmend zu halten, dass sie im Klemmelement 66 fest gehalten ist.

In einer anderen Ausführungsform kann die Verlängerungseinrichtung in jeglicher Art anders am unteren Dachmodul 4 befestigt werden. Einige oder alle der beschriebenen Merkmale des Klemmelement 66 können auf ein anderes Element übertragen werden, das nicht auf das Dachmodul 4 aufgesteckt ist oder mit einem aufgesteckten Element verbunden ist.

Mit dem gezeigten Dacheindeckungssystem 8 können rahmenlose Dachmodule 4, 6 zur Dacheindeckung des Schrägdachs 2 verwendet werden. Sie können ohne Rahmen und direkt wie vom Hersteller geliefert auf der Baustelle in das Dacheindeckungssystem montiert werden, sodass sie auch im montierten bzw. betriebsbereiten Zustand rahmenlos sind.

Das Dacheindeckungssystem 8 ist außerdem für jegliche Größe von Dachmodulen 4, 6 verwendbar, wobei die Abstände der Längsschienen 10 und Querschienen 12 zueinander entsprechend an die Maße der Dachmodule 4, 6 angepasst werden. Durch die Verschiebbarkeit der Längsschienen 10 auf den Querschienen 12 kann das Dacheindeckungssystem 8 mit seinen Längs- und Querschienen 10, 12 an jede Breite eines Dachmoduls 4, 6 angepasst werden. Eine Anpassung an die Länge der Dachmodule 4, 6 wird durch eine entsprechende Montage der unteren Querschienen 12 auf dem Dachsparren 56 erreicht.

Anstelle der PV-Module 4 können auch Dachflächenfenster 6, Thermosolarmodule oder beliebige andere Module verwendet werden, die auch in einem einzigen Dacheindeckungssystem auf einem einzigen Schrägdach 2 beliebig miteinander kombinierbar sind. Eine Anpassung an die Dicke der entsprechenden Dachmodule 4, 6 wird durch eine entsprechende Anpassung der Bemaßungen der Dichtungen 44, 70 erreicht. Auch innerhalb eines Schrägdachs 2 sind verschieden dicke Dachmodule 4, 6 beliebig miteinander kombinierbar.

Durch die geschuppte Anordnung der Längsschienen 10 ist die Verschuppung der Dachmodule 4, 6 in das Dacheindeckungssystem 8 übertragen. Da ein Dachmodul 4, 6 beidseitig von jeweils zwei Längsschienen 10 gehalten ist, die in ihrer Länge die Dachmodule 4, 6 maximal ein kleines Stück überragen, beispielsweise nicht mehr als 20 %, insbesondere 10 % einer langen Ausdehnung eines Dachmoduls 4, 6, wird eine Trennung der Längsschienen 10 von einer Reihe Dachmodule 4, 6 zur nächsten darunter- oder darüberliegenden Reihe Dachmodule 4, 6 erreicht. Jede Reihe Dachmodule 4, 6 ist mit jeweils eigenen Längsschienen 10 versehen. Hierdurch wird die Überschuppung in das Dacheindeckungssystem 8 übertragen, sodass die Längsschienen 10 nicht parallel zum Schrägdach 2 sondern parallel zu jeweils den Dachmodulen 4, 6 ausgerichtet sind.

### Bezugszeichenliste

- 2: Schrägdach
- 4: Dachmodul
- 6: Dachmodul
- 8: Dacheindeckungssystem
- 10: Längsschiene
- 12: Querschiene
- 14: Ablaufrichtung
- 16: Unterkante
- 18: Oberkante
- 20: Plattform
- 22: Ablaufrinne
- 24: Ausnehmungen
- 26: Fuß
- 27: Ausnehmung
- 28: Stützschiene
- 29: Auflage
- 30: Klemmelement
- 31: Hals
- 32: Längsöffnung
- 34: Längsöffnung
- 36: Längsöffnung
- 38: Befestigungsmittel
- 40: Längsöffnung
- 42: Klemmvorrichtung
- 44: Dichtung
- 46: Längskante
- 48: Längskante
- 50: Ende
- 52: Verzahnung
- 54: Schraube
- 56: Dachsparren
- 58: Gleitlager
- 60: Ausnehmung
- 62: Ausformung
- 64: Modulverlängerung
- 66: Klemmelement
- 68: Verlängerungselement
- 70: Dichtung
- 72: Ausnehmung
- 74: Dichtung
- 76: Modulverlängerung
- 78: Abwinkelung
- 80: Oberkante
- 82: Lippe
- 84: Ausnehmung
- 86: Adapterelement
- 88: Linie
- 90: Ausnehmung
- 92: Ausnehmung
- 94: Ausformung

## Patentansprüche

1. Dacheindeckungssystem (8) zur Befestigung von auf einem Schrägdach (2) geschuppt angeordneten und als Dacheindeckung dienenden rahmenlosen Dachmodulen (4, 6), mit den Dachmodulen (4, 6), einer Anzahl in Ablaufrichtung (14) ausgerichteten Längsschienen (10) und einer Klemmvorrichtung (42) zur klemmenden Befestigung der Dachmodule (4, 6) auf den Längsschienen (10),
**gekennzeichnet durch** eine an einem der Dachmodule befestigte Modulverlängerung (64), mit dem das Dachmodul (4, 6) unter ein darüber liegendes Dachmodul (4, 6) nach oben verlängert ist, so dass ein Eindrücken von Regen zwischen den beiden Dachmodulen (4, 6) hindurch in das Schrägdach (2) mithilfe der Modulverlängerung (64) vermieden wird.

2. Dacheindeckungssystem (8) nach Anspruch 1,
**dadurch gekennzeichnet, dass** jede der Längsschienen (10) mit einer Klemmvorrichtung (42) ausgerüstet ist, die einstückig an die Längsschiene (10) angeformt ist.

3. Dacheindeckungssystem (8) nach Anspruch 1 oder 2,
**dadurch gekennzeichnet, dass** die Klemmvorrichtung (42) zum Klemmen von zwei nebeneinander angeordneten Dachmodulen (4, 6) aufgeführt ist.

4. Dacheindeckungssystem (8) nach einem der vorhergehenden Ansprüche,
**dadurch gekennzeichnet, dass** die Klemmvorrichtung (42) ein Dach über eine Längskante (46) eines geklemmten Dachmoduls (4, 6) bildet, das entlang der Längskante (46) verläuft.

5. Dacheindeckungssystem (8) nach einem der vorhergehenden Ansprüche,
**dadurch gekennzeichnet, dass** eine Längsschiene (10) mit einer Plattform (20) zum Tragen eines Dachmoduls (4, 6) in der Weise ausgeführt ist, dass eine in die Klemmvorrichtung (42) eingeschobene Längskante (46) des Dachmoduls (4, 6) nach innen über die Plattform (20) hinausragt und frei hängt.

6. Dacheindeckungssystem (8) nach einem der vorhergehenden Ansprüche,
**gekennzeichnet durch** ein Dachmodul (4, 6), das seitlich in die Klemmvorrichtung (42) eingeschoben ist.

7. Dacheindeckungssystem (8) nach Anspruch 6,
**dadurch gekennzeichnet, dass** zwischen Dachmodul (4, 6) und Klemmvorrichtung (42) eine Dichtung (44, 70) angeordnet ist, die in ihren Abmessungen so gefertigt ist, dass sie durch die Klemmvorrichtung (42) von außen zusammengedrückt das Dachmodul (4, 6) klemmend hält.

8. Dacheindeckungssystem (8) nach Anspruch 7,
**dadurch gekennzeichnet, dass** die Dichtung (44, 70) an ihrem unteren Ende (50) eine Verdickung in der Art aufweist, dass die Verdickung auf einer Plattform (20) der Längsschiene (10) zum Tragen eines Dachmoduls (4, 6) aufliegt, und die Dichtung (44, 70) sich in Richtung zur in die Klemmvorrichtung (42) eingeschobenen Längskante (46) des Dachmoduls (4, 6) verjüngt.

9. Dacheindeckungssystem (8) nach einem der vorhergehenden Ansprüche,
**dadurch gekennzeichnet, dass** eine Längsschiene (10) eine Plattform (20) zum Tragen eines Dachmoduls (4, 6) aufweist, in die ein Kondensatablauf (22) eingearbeitet ist.

10. Dacheindeckungssystem (8) nach einem der vorhergehenden Ansprüche,
**gekennzeichnet durch** eine Befestigungseinrichtung zum Befestigen von zwei zueinander parallelen Längsschienen (10) aneinander.

11. Dacheindeckungssystem (8) nach Anspruch 10,
**dadurch gekennzeichnet, dass** die Befestigungseinrichtung eine Befestigung der beiden Längsschienen (10) aneinander in zwei zueinander in der Höhe versetzten Positionen erlaubt.

12. Dacheindeckungssystem (8) nach Anspruch 10 oder 11,
**dadurch gekennzeichnet, dass** die Befestigungseinrichtung zwei übereinander liegende Öffnungen (32, 34) in einer der Längsschienen (10) aufweist, in die jeweils ein Befestigungsmittel (38) einführbar ist, dass in eine Öffnung (40) der anderen Längsschiene (10) eingreift.

13. Dacheindeckungssystem (8) nach einem der Ansprüche 10 bis 12,
**dadurch gekennzeichnet, dass** die Befestigungseinrichtung eine in beide Längsschienen (10) eingeschobenen Bolzen aufweist, der mittels einer in eine der Längsschienen (10) eingreifende Verdickung in dieser Längsschiene (10) radial zentriert ist.

14. Dacheindeckungssystem (8) nach Anspruch 13,
**dadurch gekennzeichnet, dass** die Modulverlängerung (64) ein auf ein Dachmodul (4, 6) aufgestecktes Klemmelement (66) umfasst, in ein flächiges Verlängerungselement (68) eingesteckt ist.

## Claims

1. Roof covering system (8) for fastening frameless roof modules (4, 6) that are arranged in an imbricated manner on a pitched roof (2) and serve as a roof covering, having the roof modules (4, 6), a number of longitudinal rails (10) oriented in a run-off direction (14), and a clamping apparatus (42) for fastening the roof modules (4, 6) to the longitudinal rails (10) in a clamped manner, **characterized by** a module extension (64) which is fastened to one of the roof modules and with which the roof module (4, 6) is extended upwards under a roof module (4, 6) located thereabove, such that any penetration of rain between the two roof modules (4, 6) and into the pitched roof (2) is avoided with the aid of the module extension (64).

2. Roof covering system (8) according to Claim 1, **characterized in that** each of the longitudinal rails (10) is equipped with a clamping apparatus (42), which is integrally formed on the longitudinal rail (10).

3. Roof covering system (8) according to Claim 1 or 2, **characterized in that** the clamping apparatus (42) is designed to clamp two roof modules (4, 6) arranged alongside one another.

4. Roof covering system (8) according to one of the preceding claims,
**characterized in that** the clamping apparatus (42) forms a roof via a longitudinal edge (46) of a clamped roof module (4, 6), said roof extending along the longitudinal edge (46).

5. Roof covering system (8) according to one of the preceding claims,
**characterized in that** a longitudinal rail (10) is designed with a platform (20) for carrying a roof module (4, 6) such that a longitudinal edge (46), introduced into the clamping apparatus (42), of the roof module (4, 6) projects inwardly beyond the platform (20) and hangs freely.

6. Roof covering system (8) according to one of the preceding claims,
**characterized by** a roof module (4, 6) which has been introduced laterally into the clamping apparatus (42).

7. Roof covering system (8) according to Claim 6,
**characterized in that** a seal (44, 70) is arranged between the roof module (4, 6) and clamping apparatus (42), said seal (44, 70) being dimensioned such that it clamps the roof module (4, 6) in a manner compressed from the outside by the clamping apparatus (42).

8. Roof covering system (8) according to Claim 7,
**characterized in that** the seal (44, 70) has a thickened portion at its lower end (50) such that the thickened portion rests on a platform (20) of the longitudinal rail (10) for carrying a roof module (4, 6), and the seal (44, 70) narrows in the direction of the longitudinal edge (46), introduced into the clamping apparatus (42), of the roof module (4, 6).

9. Roof covering system (8) according to one of the preceding claims,
**characterized in that** a longitudinal rail (10) has a platform (20) for carrying a roof module (4, 6), a condensation drain (22) being incorporated into said platform (20).

10. Roof covering system (8) according to one of the preceding claims,
**characterized by** a fastening device for fastening two mutually parallel longitudinal rails (10) together.

11. Roof covering system (8) according to Claim 10,
**characterized in that** the fastening device allows the two longitudinal rails (10) to be fastened together in two positions that are offset in height with respect to one another.

12. Roof covering system (8) according to Claim 10 or 11,
**characterized in that** the fastening device has two openings (32, 34), located one above the other, in one of the longitudinal rails (10), into which in each case one fastening means (38) is introducible, which engages in an opening (40) in the other longitudinal rail (10).

13. Roof covering system (8) according to one of Claims 10 to 12,
**characterized in that** the fastening device has a bolt introduced into both longitudinal rails (10), said bolt being radially centred in one of the longitudinal rails (10) by means of a thickened portion engaging in said longitudinal rail (10).

14. Roof covering system (8) according to Claim 13,
**characterized in that** the module extension (64) comprises a clamping element (66) plugged onto a roof module (4, 6), a planar extension element (68) being plugged into said clamping element (66).

## Revendications

1. Système de recouvrement de toit (8) pour la fixation de modules de toit sans cadre (4, 6) disposés en formation imbriquée sur un toit incliné (2) et servant de recouvrement de toit, avec les modules de toit (4, 6), un nombre de rails longitudinaux (10) orientés dans la direction d'écoulement (14) et avec un dispositif de serrage (42) pour la fixation serrée des modules de toit (4, 6) sur les rails longitudinaux (10),
**caractérisé par** un prolongement de module (64) fixé à un des modules de toit, avec lequel le module de toit (4, 6) est prolongé vers le haut en dessous d'un module de toit placé par-dessus, de telle manière qu'une pénétration de pluie entre les deux modules de toit (4, 6) à travers celui-ci dans le toit incliné (2) soit évitée à l'aide du prolongement de module (64).

2. Système de recouvrement de toit (8) selon la revendication 1, **caractérisé en ce que** chacun des rails longitudinaux (10) est muni d'un dispositif de serrage (42), qui est façonné d'une seule pièce sur le rail longitudinal (10).

3. Système de recouvrement de toit (8) selon la revendication 1 ou 2, **caractérisé en ce que** le dispositif de serrage (42) est conçu pour serrer deux modules de toit (4, 6) disposés l'un à côté de l'autre.

4. Système de recouvrement de toit (8) selon l'une quelconque des revendications précédentes, **caractérisé en ce que** le dispositif de serrage (42) forme au-dessus d'un bord longitudinal (46) d'un module de toit serré (4, 6) un toit qui s'étend le long du bord longitudinal (46) .

5. Système de recouvrement de toit (8) selon l'une quelconque des revendications précédentes, **caractérisé en ce qu'**un rail longitudinal (10) est réalisé avec une plate-forme (20) destinée à porter un module de toit (4, 6), de telle manière qu'un bord longitudinal (46) du module de toit (4, 6) glissé dans le dispositif de serrage (42) déborde vers l'intérieur au-delà de la plate-forme (20) et pende librement.

6. Système de recouvrement de toit (8) selon l'une quelconque des revendications précédentes, **caractérisé par** un module de toit (4, 6), qui est glissé latéralement dans le dispositif de serrage (42).

7. Système de recouvrement de toit (8) selon la revendication 6, **caractérisé en ce qu'**un joint d'étanchéité (44, 70) est disposé entre le module de toit (4, 6) et le dispositif de serrage (42), joint qui est fabriqué, en ce qui concerne ses dimensions, de telle manière qu'il maintienne par serrage le module de toit (4, 6) en étant comprimé de l'extérieur par le dispositif de serrage (42).

8. Système de recouvrement de toit (8) selon la revendication 7, **caractérisé en ce que** le joint d'étanchéité (44, 70) présente à son extrémité inférieure (50) une surépaisseur, de telle manière que la surépaisseur repose sur une plate-forme (20) du rail longitudinal (10) destinée à porter un module de toit (4, 6), et le joint d'étanchéité (44, 70) s'amincit en direction du bord longitudinal (46) du module de toit (4, 6) glissé dans le dispositif de serrage (42).

9. Système de recouvrement de toit (8) selon l'une quelconque des revendications précédentes, **caractérisé en ce qu'**un rail longitudinal (10) présente une plate-forme (20) destinée à porter un module de toit (4, 6), dans laquelle est usiné un écoulement de condensat (22).

10. Système de recouvrement de toit (8) selon l'une quelconque des revendications précédentes, **caractérisé par** un dispositif de fixation pour la fixation l'un à l'autre de deux rails longitudinaux (10) parallèles l'un à l'autre.

11. Système de recouvrement de toit (8) selon la revendication 10, **caractérisé en ce que** le dispositif de fixation permet une fixation des deux rails longitudinaux (10) l'un à l'autre dans deux positions décalées en hauteur l'une par rapport à l'autre.

12. Système de recouvrement de toit (8) selon la revendication 10 ou 11, **caractérisé en ce que** le dispositif de fixation présente deux ouvertures (32, 34) situées l'une au-dessus de l'autre dans un des rails longitudinaux (10), dans lesquelles un moyen de fixation (38) qui s'engage dans une ouverture (40) de l'autre rail longitudinal (10), peut respectivement être introduit.

13. Système de recouvrement de toit (8) selon l'une quelconque des revendications 10 à 12, **caractérisé en ce que** le dispositif de fixation présente un boulon glissé dans les deux rails longitudinaux (10), qui est centré radialement dans ce rail longitudinal (10) au moyen d'une surépaisseur engagée dans un des rails longitudinaux (10) .

14. Système de recouvrement de toit (8) selon la revendication 13, **caractérisé en ce que** le prolongement de module (64) comprend un élément de serrage (66) engagé sur un module de toit (4, 6) et dans lequel un élément de prolongement plat (68) est engagé.
